# EUROPÄISCHE PATENTSCHRIFT

(11) **EP 3 402 834 B1**
(45) Veröffentlichungstag und Bekanntmachung des Hinweises auf die Patenterteilung: **22.09.2021**
(21) Anmeldenummer: 16805833.7
(22) Anmeldetag: 05.12.2016
(51) Int. Cl.: C09J 5/06, C09J 175/06, C09J 11/04, C09J 175/12, C08L 67/00, C08G 18/42, C08G 18/76

(54) **REAKTIVE POLYURETHAN-SCHMELZKLEBSTOFFE ENTHALTEND FÜLLSTOFFE**
REACTIVE POLYURETHANE MELT ADHESIVES CONTAINING FILLERS
ADHÉSIFS POLYURÉTHANE FUSIBLES CONTENANT DES MATIÈRES DE REMPLISSAGE

(30) Priorität: 13.01.2016 DE 102016200282
(43) Veröffentlichungstag der Anmeldung: 21.11.2018
(73) Patentinhaber: Henkel AG & Co. KGaA, 40589 Düsseldorf (DE)
(72) Erfinder: FRANKEN, Uwe, 41542 Dormagen (DE); JONSCHER, Karin, 40589 Düsseldorf (DE)
(86) Internationale Anmeldenummer: PCT/EP2016/079723
(87) Internationale Veröffentlichungsnummer: WO 2017/121540

(56) Entgegenhaltungen:
- DE-A1-102007 023 982
- US-A1- 2007 155 859
- DATABASE WPI Week 200477 Thomson Scientific, London, GB; AN 2004-778723 XP002765635, & JP 2004 307788 A (HITACHI KASEI POLYMER KK) 4. November 2004 (2004-11-04)

## Beschreibung

Die vorliegende Erfindung betrifft einen reaktiven Polyurethan-(PUR)-Schmelzklebstoff, insbesondere einen feuchtigkeitsvernetzenden Ein-Komponenten-Polyurethan-Schmelzklebstoff (1K-PUR-Schmelzklebstoff), wobei der PUR-Klebstoff neutralisierte Glashohlkugeln als Füllstoffe enthält, sowie die Verwendung des Klebstoffs zum Verkleben von Substraten.

Reaktive Polyurethan-Schmelzklebstoffe (PUR), insbesondere solche die feuchtigkeitsvernetzend sind, sind in der Industrie allgemein bekannt. Es handelt sich dabei um vorwiegend lösemittelfreie, vernetzende Klebstoffe, die dazu dienen eine Vielzahl von flächigen Substraten, wie Dekorfolien, textile Gewebe, Papierfolien, ABS-Folien, geschäumte PVC-Folien, Holzplatten, Holzfaser-Formkörper oder Metallfolien, miteinander zu verkleben. Ganz allgemein werden solche reaktiven Schmelzklebstoffe für anspruchsvolle Verklebungen eingesetzt, die ein hohes Festigkeitsniveau und eine hohe Wärmestandfestigkeit der Verklebung erfordern. Die Vernetzung erfolgt entweder durch Energiezufuhr, d.h. weiteres Erhitzen, oder, wie bereits vorstehend erwähnt, mittels Feuchtigkeit, um so einen unschmelzbaren Klebstoff zu ergeben. Reaktive feuchtigkeitshärtende Schmelzklebstoffe haben in der industriellen Praxis eine weite Verbreitung gefunden und werden wie die thermoplastischen Schmelzklebstoffe aus der Schmelze aufgetragen. Nach dem Auftrag, dem Fügen der zu verbindenden Substrat-Teile und dem Abkühlen dieser Schmelze erfolgt zunächst eine rasche physikalische Abbindung des Schmelzklebstoffes durch dessen Erstarren. Daran schließt sich bei den feuchtigkeitsreaktiven Schmelzklebstoffen eine chemische Reaktion der noch vorhandenen reaktiven Gruppen mit der Feuchtigkeit aus der Umgebung an, so dass ein vernetzter und unschmelzbarer Klebstoff entsteht. In der Regel ist es das Bestreben, die reaktiven Schmelzklebstoffe, z.B. auf der Basis von feuchtigkeitsvernetzenden reaktiven Polyurethanen, so zu gestalten, dass sowohl die Anfangsfestigkeit durch das Erstarren als auch die Endfestigkeit durch die Feuchtigkeitsvernetzung so schnell wie möglich erfolgt, damit die gefügten Bauteile entweder weiterverarbeitet werden können oder endgültig in Gebrauch genommen werden können.

Üblicherweise werden in solchen Klebstoffsystemen Füllstoffe zur Reduzierung der Dichte eingesetzt. Hierbei sind insbesondere Glashohlkugeln von Bedeutung, da diese sich durch hohe Scher-, Druck- und Temperaturstabilität auszeichnen. Bei isocyanat-haltigen Zubereitungen mit endständigen Isocyanatgruppen, wie den bekannten 1K-PUR-Schmelzklebstoffen, führt allerdings der alkalische Charakter der marktüblichen Glashohlkugeln zu einer stark eingeschränkten Lager- und Verarbeitungsstabilität, die sich bei den PUR-Schmelzklebstoffen in Form von extrem schnellen Viskositätsanstiegen bis hin zur vollständigen Vergelung bemerkbar macht. Ein ähnliches Verhalten lässt sich auch bei Verwendung von Polymermikrokapseln beobachten, wie sie in der DE 10 2007 023 982 A1 beschrieben werden. Zudem weisen solche Polymermikrokapseln Nachteile hinsichtlich der Scher-, Druck- und Temperaturstabilität auf.

Weiterhin ist der Einsatz von Säuren zur Stabilisierung von NCO-funktionellen Verbindungen bekannt. So wird in EP 0 856 551 A1 ein Verfahren offenbart, bei dem polyphosphorige Säure zur Stabilisierung von NCO-funktionellen Verbindungen eingesetzt wird. US 3,179,625 beschreibt ein Verfahren zur Herstellung hitzestabiler isocyanatterminierter Polyurethanpräpolymere, bei dem eine Säure mit einer Dissoziationskonstante von größer als 1 × 10⁻⁵, wie beispielsweise Phosphorsäure, phosphorige Säure oder pyrophosphorige Säure, eingesetzt wird. EP 0 764 670 A1 und WO 96/06122 offenbaren reaktive Schmelzklebstoffe auf Polyurethanbasis mit Borosilikat-Glashohlkugeln. Es wird beschrieben, dass aus den Oberflächen der Borosilikat-Glashohlkugeln Sodiumborat exsudiert, was zu einer Erhöhung der Alkalinität und zu einer Trimerisierung von Isocyanaten führen kann. Um dies zu vermeiden werden starke Säuren, wie beispielsweise Phosphorsäure oder Schwefelsäure, zur Klebstoffformulierung hinzugegeben. Es hat sich nun aber gezeigt, dass die Hinzugabe von Säuren zu Klebstoffformulierungen häufig nicht zu einer ausreichenden Stabilisierung führt. Weiterhin kann die Zugabe von Säuren zu einer Verlangsamung der Aushärtungsreaktion des Klebstoffs führen, was nicht erwünscht ist. Zudem ist die Verwendung von Säuren, insbesondere von starken anorganischen Säuren, bei der industriellen Herstellung von Klebstoffen aufgrund der damit verknüpften Gesundheits- und Sicherheitsrisiken und der dadurch zusätzlich erforderlichen Sicherheitsvorkehrungen in der Regel unerwünscht.

DE 10 2007 023982 betrifft Schmelzklebstoffe, insbesondere einen Schmelzklebstoff mit reduzierter Dichte, wobei der Schmelzklebstoff expandierende Mikrohohlkugeln enthält. Im Rahmen dieser Erfindung wurde gefunden, dass sich durch die Inkorporierung der expandierenden Mikrohohlkugeln in einen Schmelzklebstoff nicht nur dessen Dichte und Eigengewicht reduzieren lassen, sondern auch dessen Verarbeitungs- und Gebrauchseigenschaften verbessert werden können, insbesondere im Hinblick auf eine reduzierte Auftragsmenge beziehungsweise Auftragsgewicht bei gleichzeitig erhöhtem Auftragsvolumen und verbesserter Verstreichbarkeit.

US 2007/155859 beschreibt eine heißschmelzende Polyurethan-Klebstoffzusammensetzung, die bei Raumtemperatur fest ist und durch Feuchtigkeit gehärtet werden kann. Die Klebstoffzusammensetzungen werden durch Kombination eine Isocyanat-funktionalisierten Polyurethanprepolymeren und hohlen polymeren Mikrokugeln erhalten. Die beschriebenen Klebstoffzusammensetzungen zeigen im Vergleich zu analogen Klebstoffen, die nicht mit hohlen Mikrokugeln modifiziert wurden, eine erhöhte Grünfestigkeit, eine verkürzte Offenzeit und verringerte Dichten.

JP 2004 307788 offenbart einen 1K- Urethanklebstoff, der ein Polyurethanprepolymer, das über eine aktive Isocyanatgruppe verfügt und durch Umsetzung eines Polyols mit einer Polyisocyanatverbindung erhalten wird, und einen hohlen Füllstoff aufweist. Der Klebstoff zeigt eine ausgezeichnete Ablösbarkeit und kann einfach wieder entfernt werden, ohne dass dabei das zu verklebende Substrat, beispielsweise Holz, beschädigt wird.

Es besteht daher Bedarf an Formulierungen, die diese Nachteile nicht aufweisen und beim Einsatz entsprechender Füllstoffe ähnliche Lager- und Verarbeitungsstabilitäten zeigen, wie die korrespondierenden füllstofffreien Formulierungen.

Es wurde nun überraschenderweise gefunden, dass Glashohlkugeln, die neutralisiert wurden, sehr stabile Formulierungen mit der gewünschten Dichte ergeben.

In einem ersten Aspekt betrifft die Erfindung daher eine reaktive Schmelzklebstoff-Zusammensetzung auf Polyurethanbasis enthaltend bezogen auf das Gesamtgewicht der Klebstoff-Zusammensetzung 1 bis <30 Gew.-%, vorzugsweise 1 bis <10 Gew.-%, insbesondere bevorzugt 2 bis 6 Gew.-% mindestens eines festen, partikulären Füllstoffs, dadurch gekennzeichnet, dass der mindestens eine Füllstoff neutralisierte Glashohlkugeln sind, wobei die Glashohlkugeln als 5 Gew.-%ige Dispersion in Wasser bei 20°C einen pH-Wert von 6 bis 8, vorzugsweise von 6,5 bis 7,5 aufweisen.

In noch einem weiteren Aspekt betrifft die Erfindung die Verwendung der hierin beschriebenen Schmelzklebstoff-Zusammensetzungen zum Verkleben von zwei oder mehr Substraten, Verfahren zum Verkleben von zwei oder mehr Substraten, wobei die hierin beschriebenen Schmelzklebstoff-Zusammensetzungen auf eines oder mehrere der zu verklebenden Substrate aufgebracht werden, sowie die so erhältlichen Substrate.

Die im vorliegenden Text angegebenen Molekulargewichte beziehen sich, soweit nicht anders angegeben, auf das Zahlenmittel des Molekulargewichts (Mn). Das Molekulargewicht Mn kann auf Basis einer Endgruppenanalyse (Hydroxylzahl gemäß DIN 53240-1:2013-06 oder NCO Gehalt gemäß EN ISO 11909), oder durch Gelpermeationschromatographie (GPC) gemäß DIN 55672-1:2007-08 mit THF als Eluent bestimmt werden. Falls nicht anders angegeben, sind die aufgeführten Molekulargewichte solche, die mittels GPC bestimmt wurden. Das Gewichtsmittel des Molekulargewichts Mw kann ebenfalls mittels GPC, wie oben angegeben, bestimmt werden.

Die Angabe "mindestens ein", bezogen auf einen Inhaltsstoff, bezieht sich auf die Art des Inhaltsstoffs und nicht auf die absolute Zahl der Moleküle. "Mindestens ein Polyol" bedeutet somit beispielsweise mindestens eine Art von Polyol, d.h. dass eine Art von Polyol oder eine Mischung mehrerer verschiedener Polyole verwendet werden kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die betreffende Mischung.

"Ungefähr" oder "ca.", wie hierin im Zusammenhang mit einem Zahlenwert verwendet bezieht sich auf den Zahlenwert ±10 %, vorzugsweise ±5%.

Die eingesetzten Füllstoffe sind bei Raumtemperatur (20°C) und Normaldruck (1013 mbar) feste Partikel. Bei den Füllstoffen handelt es sich um Glashohlkugeln, die sich gegenüber den typischerweise kommerziell erhältlichen und als Füllstoffe eingesetzten Glashohlkugeln dadurch auszeichnen, dass sie neutralisiert sind, d.h. keinen stark alkalischen Charakter aufweisen. Das kann beispielsweise dadurch bestimmt werden, dass der pH-Wert einer 5%igen (w/w) Dispersion der entsprechenden Glashohlkugeln in entmineralisiertem Wasser bei 20°C mittels EN ISO 10523:2012-04 gemessen wird und dabei 6 bis 8, am bevorzugtesten von 6,5 bis 7,5 beträgt.

Derartige Glashohlkugeln können beispielsweise durch Behandlung der Oberfläche mit einer geeigneten Säure, wie beispielsweise Phosphorsäure, hergestellt werden. Geeignete Glashohlkugeln sind beispielsweise unter der Produktbezeichnung Glass Bubbles iM30K-N von 3M™ erhältlich.

Die eingesetzten Glashohlkugeln können in verschiedene Ausführungsformen die üblichen, für den beschriebenen Verwendungszweck eingesetzten Partikelgrößen und Partikelgrößenverteilungen aufweisen. In verschiedenen Ausführungsformen weisen die Glashohlkugeln eine mittlere Partikelgröße d₅₀ von 5 bis 50 µm auf. Zur Bestimmung der Partikelgröße bzw. Partikelgrößenverteilung stehen verschiedene Methoden zur Verfügung, u.a. die Siebanalyse (nach ISO787, Teil 7), die Sedimentationsanalyse (nach DIN 66115) und die Bestimmung mittels Laserlichtbeugung gemäß der Norm ISO 13320:2009(E) (korrigierte Fassung vom 01.12.2009).

Des Weiteren ist es bevorzugt, dass die Füllstoffe als im Wesentlichen sphärische Partikel, d.h. Kugeln und insbesondere nicht als Plättchen oder Nadeln/Fasern vorliegen. Die Glashohlkugeln sind insbesondere innen hohle Kugeln mit dünnen Wänden und bestehen vorzugsweise aus Borosilikatglas. Die Dichte liegt typischerweise im Bereich von 0,5 bis 0,8 g/cm³, insbesondere bei ungefähr 0,6 g/cm³. In verschiedenen Ausführungsformen beträgt die Alkalinität in milli-Eq/g ≤0,5. Polyurethan-Klebstoffe sind allgemein bekannt. Bei den erfindungsgemäß geeigneten Klebstoffen handelt es sich um 1K-Polyurethan-Klebstoffe oder 2K-Polyurethan-Klebstoffe. Die Klebstoffe sind insbesondere Schmelzklebstoffe. Die Klebstoffe können Lösemittel enthalten, bevorzugt sind sie jedoch frei von Lösemitteln. Die Vernetzung der erfindungsgemäßen geeigneten Polyurethan-Klebstoffe beruht auf der Umsetzung von reaktiven NCO-Gruppen mit H-aciden funktionellen Gruppen, beispielsweise OH-Gruppen, Aminogruppen oder Carboxylgruppen. Eine alternative Vernetzungsmethode besteht darin, dass die NCO-Gruppen mit Feuchtigkeit aus dem aufgetragenen Klebstoff, dem Substrat, oder der Umgebung unter Bildung von Harnstoffgruppen reagieren. Diese Vernetzungsreaktionen sind bekannt, sie können auch nebeneinander ablaufen. Zur Beschleunigung solcher Reaktionen können Katalysatoren in den Klebstoff eingebracht werden, beispielsweise Amin-, Titan- oder Zinnkatalysatoren.

In bevorzugten Ausführungsformen ist der Klebstoff ein 1K-Polyurethan-Klebstoff. Ein solcher kann als Harzkomponente mindestens ein NCO-terminiertes Polyurethanpräpolymer enthalten und härtet durch Reaktion der NCO-Gruppen mit Feuchtigkeit aus dem aufgetragenen Klebstoff, dem Substrat, oder der Umgebung aus.

Die Isocyanat (NCO)-terminierten Polyurethan (PU)-Präpolymere der Harzkomponente werden durch Umsetzen eines Polyols oder einer Polyolmischung mit einem stöchiometrischen Überschuss von Polyisocyanat erhalten. Die bei der Herstellung des Präpolymers eingesetzten Polyole können alle üblicherweise für die Polyurethansynthese eingesetzten Polyole, beispielsweise Polyesterpolyole, Polyetherpolyole, Polyesteretherpolyole, Polycarbonatpolyole oder Mischungen von zwei oder mehr der genannten sein.

Polyetherpolyole können aus einer Vielzahl von Alkoholen hergestellt werden, die eine oder mehrere, primäre oder sekundäre Alkoholgruppen enthalten. Als Starter für die Herstellung der keine tertiären Aminogruppen enthaltenden Polyether können beispielsweise folgende Verbindungen oder Mischungen dieser Verbindungen eingesetzt werden: Wasser, Ethylenglykol, Propylenglykol, Glycerin, Butandiol, Butantriol, Trimethylolethan, Pentaerythrit, Hexandiol, 3-Hydroxyphenol, Hexantriol, Trimethylolpropan, Oktandiol, Neopentylglykol, 1,4-Hydroxymethylcyclohexan, Bis(4-hydroxyphenyl)dimethylmethane und Sorbit. Bevorzugt werden Ethylenglykol, Propylenglykol, Glycerin und Trimethylolpropan eingesetzt, besonders bevorzugt Ethylenglykol und Propylenglykol, und in einer besonders bevorzugten Ausführungsform wird Propylenglykol eingesetzt.

Als cyclische Ether zur Herstellung von vorstehend beschriebenen Polyethern kommen Alkylenoxide wie Ethylenoxid, Propylenoxid, Butylenoxid, Epichlorhydrin, Styroloxid oder Tetrahydrofuran oder Gemische aus diesen Alkylenoxiden in Betracht. Bevorzugt werden Propylenoxid, Ethylenoxid oder Tetrahydrofuran oder Gemische aus diesen verwendet. Besonders bevorzugt wird Propylenoxid oder Ethylenoxid oder Gemische aus diesen verwendet. Ganz besonders bevorzugt wird Propylenoxid verwendet.

Polyesterpolyole können beispielsweise durch Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton hergestellt werden. Ebenfalls als polyfunktionelle Alkohole zur Herstellung von Polyesterpolyolen geeignet sind 1,4-Hydroxymethylcyclohexan, 2-Methyl-1,3-propandiol, 1,2,4-Butantriol, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind durch Polykondensation herstellbar. So können difunktionelle und/oder trifunktionelle Alkohole mit einem Unterschuss an Dicarbonsäuren oder Tricarbonsäuren oder Gemischen aus Dicarbonsäuren oder Tricarbonsäuren, oder deren reaktiven Derivaten, zu Polyesterpolyolen kondensiert werden. Geeignete Dicarbonsäuren sind beispielsweise Adipinsäure oder Bernsteinsäure oder Dodekandisäure und ihre höheren Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Die genannten Säuren können einzeln oder als Gemische aus zwei oder mehr davon eingesetzt werden. Besonders geeignete Alkohole sind Hexandiol, Butandiol, Ethylenglykol, Diethylenglykol, Neopentylglykol, 3-Hydroxy-2,2-dimethylpropyl-3-hydroxy-2,2-dimethylpropanoat oder Trimethylolpropan oder Gemische aus zwei oder mehr davon. Polyesterpolyole mit hohem Molekulargewicht umfassen beispielsweise die Umsetzungsprodukte von polyfunktionellen, bevorzugt difunktionellen Alkoholen (gegebenenfalls zusammen mit geringen Mengen an trifunktionellen Alkoholen) und polyfunktionellen, bevorzugt difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit bevorzugt 1 bis 3 C- Atomen eingesetzt werden. Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Dodekandisäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet.

Aus Lactonen, beispielsweise auf Basis von epsilon-Caprolacton, auch "Polycaprolactone" genannt, oder Hydroxycarbonsäuren, beispielsweise omega-Hydroxycapronsäure, erhältliche Polyester, können ebenfalls eingesetzt werden.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Polycarbonatpolyole können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen dieser Diole mit Diarylcarbonaten, beispielsweise Diphenylcarbonaten, oder Phosgen, erhalten werden.

Das Molekulargewicht der zur Synthese des Präpolymers verwendeten Polyole liegt vorzugsweise im Bereich von 100 bis 20000 g/mol, insbesondere 330 bis 4500 g/mol. Die mittlere Funktionalität kann im Bereich von 2 bis 4,5 liegen. Das PU-Präpolymer weist vorzugsweise ein Polyether/Polyester-Backbone auf.

Der stöchiometrische Überschuss von Polyisocyanat beträgt bezogen auf das molare Verhältnis von NCO- zu OH-Gruppen insbesondere 1:1 bis 2,5:1, vorzugsweise 1:1 bis 2:1 und besonders bevorzugt 1,05:1 bis 1,8:1.

Es können die bekannten Lack- oder Klebstoff-Polyisocyanate eingesetzt werden, wobei es sich um Polyisocyanate mit zwei oder mehr Isocyanat-Gruppen handelt. Geeignete Polyisocyanate sind beispielsweise 1,5-Naphthylendiisocyanat (NDI), 2,4- oder 4,4'-Diphenylmethandiisocyanat (MDI), hydriertes MDI (H12MDI), Xylylendiisocyanat (XDI), Tetramethylxylylendiisocyanat (TMXDI), Di- und Tetraalkylendiphenylmethandiisocyanat, 4,4'-Dibenzyldiisocyanat, 1,3- oder 1,4-Phenylendiisocyanat, Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-lsocyanatomethyl-3-isocyanato-1,5,5-trimethylcyclohexan (IPDI), Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Methylentriphenyltriisocyanat (MIT), Phthalsäure-bis-isocyanato-ethylester, Trimethylhexamethylendiisocyanat, 1,4-Diisocyanatobutan, 1,12-Diisocyanatododecan und Dimerfettsäurediisocyanat.

Als mindestens trifunktionelle Isocyanate geeignet sind Polyisocyanate, die durch Trimerisation oder Oligomerisation von Diisocyanaten oder durch Reaktion von Diisocyanaten mit niedermolekularen, polyfunktionellen hydroxyl- oder aminogruppenhaltigen Verbindungen entstehen. Kommerzielle erhältliche Beispiele sind Trimerisierungsprodukte der Isocyanate HDI, MDI oder IPDI oder Addukte aus Diisocyanaten und niedermolekularen Triolen, wie Trimethylolpropan oder Glycerin. Weitere Beispiele sind Isocyanurate des Hexamethylendiisocyanates (HDI) und Isocyanurate des Isophorondiisocyanats (IPDI).

Es können im Prinzip aliphatische, cycloaliphatische oder aromatische Isocyanate eingesetzt werden, insbesondere sind aufgrund der Reaktivität jedoch aromatische Diisocyanate geeignet. Beispiele für geeignete Diisocyanate sind Methylendiphenyldiisocyanate (MDI), wie 4,4'-Methylendiphenyldiisocyanat, 2,4'-Methylendiphenyldiisocyanat oder 2,2'-Methylendiphenyldiisocyanat.

Aus den oben erwähnten Polyolen und den Polyisocyanaten können auf bekannte Art und Weise PU-Präpolymere hergestellt werden. Dabei kann aus den Polyolen und den Isocyanaten ein NCO-Gruppen-haltiges Präpolymer hergestellt werden. Beispiele dafür sind in der EP-A951493, EP-A1341832, EP-A 150444, EP-A 1456265, WO 2005/097861 beschrieben.

Das mindestens eine NCO-terminierte PU-Präpolymer ist vorzugsweise ein aromatisches Isocyanat-terminiertes, noch bevorzugter MDI-terminiertes Polyurethan-Präpolymer aus einer Polyesterpolyolmischung und einem aromatischen Diisocyanat, wie MDI.

Die entsprechenden Präpolymere weisen üblicherweise einen NCO-Gehalt von 0,25-5 Gew.-% (bestimmt nach Spiegelberger, DIN EN ISO 11909:2007-05) auf, vorzugsweise 0,25 bis 4 Gew.-%, und haben eine mittlere NCO-Funktionalität von 2 bis 3, insbesondere 2.

Aufgrund des eingesetzten Überschusses an Isocyanat, enthalten die NCO-terminierten PU-Präpolymere üblicherweise gewisse Mengen an Isocyanat-Monomeren, d.h. insbesondere aromatischen Polyisocyanat-Monomeren, wie beispielsweise MDI, typischerweise in Mengen von 0,1 bis 1 Gew.-% bezogen auf das Gesamtgewicht von Präpolymeren und Monomeren. Es ist allerdings bevorzugt, dass die Menge an Polyisocyanat-Monomeren <1 Gew.-%, noch bevorzugter <0,1 Gew.-% beträgt. Es können beispielsweise die bekannten Verfahren eingesetzt werden, um nicht umgesetzte monomere Polyisocyanate zu entfernen. Das kann beispielsweise durch Fällen oder durch Abfangen der monomeren Isocyanate geschehen. Eine bevorzugte Ausführungsform entfernt die nicht umgesetzten Monomere durch Abdestillieren der Monomere im Vakuum, beispielsweise in einem Dünnschichtverdampfer.

Das Molekulargewicht (Mn) des Präpolymers liegt im Bereich von 300 bis 20.000 g/mol, vorzugsweise kleiner als 12.000, insbesondere weniger als 8.000 g/mol.

Die hierin beschriebenen Klebstoffsysteme sind vorzugsweise 1K-Systeme, die feuchtigkeitsvernetzend sind.

Die beschriebenen Klebstoffsysteme enthalten die vorstehend beschriebenen Präpolymere beispielsweise in Mengen von 20 bis 95 Gew.-%, vorzugsweise 50 bis 95 Gew.-%, noch bevorzugter 70 bis 90 Gew.-% bezogen auf das Gesamtgewicht der Klebstoffzusammensetzung.

Die Schmelzklebstoffe können ferner mindestens einen thermoplastischen Polyester enthalten. Dabei soll das Molekulargewicht des thermoplastischen Polyesters unter 6000 g/mol betragen. Die Polyester müssen nur eine geringe Funktionalität aufweisen und können nur eine geringe Anzahl mit NCO-reaktiver Gruppen enthalten. Die Menge kann so ausgewählt werden, dass keine beidseitige Kettenverlängerung der Präpolymere eintritt. Die Polyester sollen im Schnitt weniger als 1,4 mit NCO-Gruppen reaktive Gruppen pro Polyesterkette enthalten. In einer bevorzugten Ausführungsform sollen sie im Schnitt weniger als 1 mit NCO-Gruppen reaktive Gruppen pro Polyesterkette enthalten, insbesondere sollen sie im Wesentlichen frei von NCO-reaktiven Gruppen sein. In einer anderen bevorzugten Ausführungsform sollen die Polyester im Schnitt weniger 1,4 aber mehr als 1 mit NCO-Gruppen reaktive Gruppen pro Polyesterkette enthalten.

Als Polyester kommen die bekannten Polyester auf Basis von Umsetzungsprodukten von polyfunktionellen, vorzugsweise difunktionellen Alkoholen, gegebenenfalls zusammen mit geringen Mengen an trifunktionellen Alkoholen, und polyfunktionellen, vorzugsweise difunktionellen und/oder trifunktionellen Carbonsäuren. Auch geeignete Esterderivate können eingesetzt werden. Es können die an sich bekannten Polyester eingesetzt werden. Insbesondere sind Polyester auf Basis von aliphatischen Carbonsäuren geeignet, besonders bevorzugt überwiegend lineare Polyester.

Die Funktionalität der thermoplastischen Polyester kann vermindert sein. Das kann durch verschiedene Maßnahmen erreicht werden. Beispielsweise kann bereits bei der Synthese durch Zugabe von einwertigen Alkoholen die Anzahl der OH- oder COOH-haltigen Endgruppen vermindert werden. Eine andere Arbeitsweise reduziert die Anzahl der funktionellen Gruppen der Polyester durch polymeranaloge Umsetzungen. Beispielsweise ist es möglich, OH- oder COOH-Gruppen durch Umsetzen mit Carbonsäurehalogeniden zu vermindern. Durch die hohe Reaktivität solcher Derivate ist die Umsetzung leicht zu erreichen. Eine andere Arbeitsweise setzt vorhandene funktionelle Gruppen mit Estern oder Orthoestern um. Durch Entfernen der flüchtigen Reaktionsprodukte kann eine Reaktion unterstützt werden und die Anzahl der reaktiven Gruppen vermindert werden. Eine weitere geeignete Arbeitsweise setzt vorhandene funktionelle Gruppen mit Carbonsäureanhydriden um. Gegebenenfalls ist es auch möglich, Anteile von Lösemitteln zuzusetzen, um die Umsetzung zu erleichtern. Diese können danach gegebenenfalls zusammen mit Nebenprodukten durch Destillation im Vakuum wieder entfernt werden.

Eine bevorzugte Ausführungsform setzt vorhandene OH- oder COOH-Gruppen mit einwertigen Isocyanaten um. Insbesondere geeignet sind Monoisocyanate, wie Phenylisocyanat, Tosylisocyanat oder Stearylisocyanat. Diese können bis zu ungefähr äquimolaren Mengen zugesetzt werden, beispielsweise mit einem NCO:OH-Verhältnis von circa 0,3:1 bis 1,02:1, insbesondere bis 0,98:1, und reagieren mit den thermoplastischen Polyestern unter Bildung von Urethangruppen. Ein Überschuss dieser monomeren Isocyanate soll vermieden werden. So kann durch die Umsetzung die Menge der mit NCO reaktiven Gruppen reduziert werden.

Die Menge der thermoplastischen Polyester in dem Schmelzklebstoff kann 3 bis 35 Gew-% betragen, insbesondere von 5 bis 25 Gew.-%. Bevorzugt handelt es sich um Polyester auf Basis von kristallinen oder semikristallinen Polyesterdiolen. Es können aber auch amorphe Polyesterdiole eingesetzt werden. Eine besondere Ausführungsform setzt solche linearen Polyester ein, die auch Urethangruppen aufweisen. Beispielsweise können geeignete thermoplastische Polyester eine Urethangruppe oder insbesondere im Mittel zwei Urethangruppen enthalten. Ein Beispiel sind lineare Polycaprolactoncopolyester-Polyurethane, wie sie beispielsweise unter dem Handelsnamen Pearlbond® 501 von Lubrizol Advanced Materials erhältlich sind.

Durch die Auswahl der eingesetzten thermoplastischen Polyester mit wenigen reaktiven Gruppen kann sichergestellt werden, dass der erfindungsgemäße Klebstoff eine entsprechend niedrige Viskosität aufweist. Weiterhin ist durch die Auswahl des Polyesters ein niedriger Schmelzpunkt ermöglicht, sodass schon bei niedrigen Temperaturen eine geeignete Applikationsviskosität erhalten werden kann.

Weiterhin können in dem erfindungsgemäßen Klebstoff die üblichen Additive enthalten sein. Bei den weiteren Bestandteilen handelt es sich beispielsweise um klebrig machende Harze (Tackifier), Haftvermittler, Vernetzungsmittel oder Viskositätsregler, Pigmente, Weichmacher, Stabilisatoren und/oder Katalysatoren, Wachse oder Antioxidantien.

Als klebrigmachende Harze können z.B. Abietinsäure, Abietinsäureester, Terpenharze, Terpenphenolharze, phenolmodifizierte Styrolpolymere, phenolmodifizierte α-Methylstyrolpolymere oder Kohlenwasserstoffharze Verwendung finden. Als Katalysatoren sind die bekannten metallorganischen und / oder aminischen Katalysatoren in Mengen bis zu 2 % geeignet, z.B. die metallorganischen Verbindungen des Zinns, Eisens, Titans oder Wismuts wie Zinn(ll)salze von Carbonsäuren oder die Dialkyl-Zinn(IV)-Carboxylate. Als Stabilisatoren dienen beispielsweise Antioxidantien, wie die handelsüblichen sterisch gehinderten Phenole und/oder Thioether und/oder substituierten Benzotriazole oder die sterisch gehinderten Amine vom Typ des HALS. In speziellen Zusammensetzungen können insbesondere auch Weichmacher zugesetzt werden. Dabei handelt es sich um nicht reaktive Weichmacher, beispielsweise um naphtenische Mineralöle, Polypropylen-, Polybuten-, Polyisobutylen, Polyisopren-Oligomere, hydrierte Polyisopren- und/oder Polybutadien-Oligomere, Benzoatester, Phthalate, Adipate oder Kohlenwasserstofföle. Typische Haftvermittler sind zum Beispiel Ethylen/Acrylamid-Comonomere, polymere Isocyanate, reaktive siliciumorganische Verbindungen oder Phosphorderivate, insbesondere sind auch Silane geeignet, die hydrolysierbare Gruppen enthalten. Pigmente können in geringen Mengen ebenfalls enthalten sein. Wachse können natürlichen, ggf. auch in chemisch modifizierter Form, oder synthetischen Ursprungs sein. Als natürliche Wachse können pflanzliche Wachse, tierische Wachse eingesetzt werden, auch Mineralwachse oder petrochemische Wachse sind geeignet. Insgesamt können die Additive bis zu 25 Gew-% im Klebstoff enthalten sein.

Ein erfindungsgemäßer Schmelzklebstoff enthält insbesondere 20 bis 95 Gew-% mindestens eines NCO-terminierten Präpolymers, vorzugsweise mit einem Molekulargewicht unter 12000 g/mol, als Umsetzungsprodukt aus Polyetherdiolen, Polyesterdiolen und/oder Polyalkylendiolen und einem Überschuss von aromatischen Diisocyanaten, 3 bis 35 Gew.-% eines thermoplastischen Polyesters mit einem Molekulargewicht (Mn) unter 6000 g/mol, der weniger als 1,4 NCO-reaktive Gruppen aufweist, 2 bis 6 Gew.-% der hierin beschriebenen Glashohlkugeln als Füllstoff, sowie bis 25 Gew-% Additive. Dabei soll die Summe der Bestandteile 100 Gew.-% ergeben.

Die hierin beschriebenen Klebstoffe können Lösemittel enthalten oder lösemittelfrei sein. Vorzugsweise sind die Klebstoffe allerdings im Wesentlichen lösemittelfrei. "Im Wesentlichen frei", wie hierin verwendet, bedeutet, dass die Zusammensetzung weniger als 1 Gew.-%, vorzugsweise weniger als 0,5 Gew.-% der entsprechenden Komponente enthält.

Die erfindungsgemäßen Polyurethan-Schmelzklebstoffe sind bei Applikationstemperaturen flüssig und als Schmelzklebstoffe bei Raumtemperatur typischerweise fest. Die hierin beschriebenen Zusammensetzungen haben, in verschiedenen Ausführungsformen, bei einer Temperatur von 130°C eine Viskosität von 2000 bis 60.000, insbesondere bis 40.000 mPas bestimmt nach DIN EN ISO 2555:2000-01 (Brookfield-Viskosimeter RV DV-II, Spindel Nr. 27, 130°C; 5 U/min). Dabei kann der NCO-Gehalt des Klebstoffs zwischen 0,25 bis 4 Gew.-% betragen.

In verschiedenen Ausführungsformen zeichnen sich die hierin beschriebenen Klebstoffe dadurch aus, dass sie nach 16h bei 130°C einen Viskositätsanstieg (dynamische Viskosität nach Brookfield, wie oben beschrieben bestimmt) von nicht mehr als 400% zeigen, vorzugsweise nicht mehr als 250%.

In verschiedenen Ausführungsformen weisen die beschriebenen Schmelzklebstoffe eine Dichte von ≤1,5 g/cm³, vorzugsweise 0,8 bis 1,5 g/cm³, noch bevorzugter 0,9 bis 1,2 g/cm³, am bevorzugtesten von 0,9 bis 1,1 g/cm³ auf.

Der erfindungsgemäße Schmelzklebstoff ist zum Verkleben von verschiedenen Substraten geeignet. Insbesondere können auch Substrate verklebt werden, die temperaturempfindlich sind, wie z.B. empfindliche Folien, Kunststoff, Papier und ähnliche Substrate. Dabei kann ein erfindungsgemäßer Klebstoff bei niedrigen Temperaturen von beispielsweise unter 150°C aufgetragen werden, insbesondere auch von 90 bis 130°C. Die Viskosität ermöglicht ein gutes Anfließen an das Substrat. Danach kühlt der Klebstoff ab, er wird fest und kristallisiert. Es bildet sich schnell eine Haftung zum Substrat aus, dabei kann das verklebte Substrat rasch weiterverarbeitet werden. Da bei der üblichen Verarbeitung der Klebstoffe diese eine längere Zeit im geschmolzenen Zustand im Vorratstank bleiben, ist es vorteilhaft, dass die Viskosität konstant dabei konstant bleibt und der Klebstoff weiterhin gut zu verarbeiten ist.

Der erfindungsgemäße Schmelzklebstoff weist nach dem Erkalten vorzugsweise einen schnellen Aufbau der Haftung der Klebstoffschicht auf. Deswegen können mit einem Schmelzklebstoff verklebte Substrate rasch weiterverarbeitet werden, die endgültige chemische Vernetzungsreaktion unter Einfluss von Feuchtigkeit kann dabei später erfolgen. Dann baut sich die endgültige Härte und Kohäsion des erfindungsgemäßen Klebstoffs auf. Es ist eine gute Haftung zu verschiedenen Substraten gegeben. Beispielsweise ist ein erfindungsgemäßer Klebstoff zum Verkleben in der Buchbinderei geeignet. Weiterhin können erfindungsgemäße Klebstoffe zum Verkleben von Verpackungen aus Papier, Karton oder Folien eingesetzt werden.

Die Klebstoffe werden mit üblichen Aggregaten und mit allen gängigen Auftragsverfahren auf die zu verklebenden Substrate aufgetragen, beispielsweise durch Sprühen, Rakeln, oder Walzenauftragswerke. Nach der Aufbringung werden die zu verklebenden Substrate auf bekannte Art und Weise miteinander verklebt.

Die erfindungsgemäßen Polyurethan-Klebstoffe sind insbesondere als Klebstoffe für flexible, flächige Substrate geeignet. Dabei wird der erfindungsgemäße Klebstoff auf ein Substrat aufgetragen. Die Auftragungsmenge beträgt dabei üblicherweise 1-5 g/m². Unter Druck wird das Substrat dann mit einem zweiten Substrat aus dem gleichen oder anderen Material verklebt.

Die Erfindung betrifft daher auch die Verwendung der hierin beschriebenen Klebstoffe zum Verkleben von zwei oder mehr Substraten, wie oben beschrieben, Verfahren zum Verkleben solcher Substrate, bei denen der Klebstoff auf eines oder mehrere der zu verklebenden Substrate aufgetragen und diese dann verklebt werden, sowie die so erhältlichen verklebten Substrate.

Alle hierin im Zusammenhang mit dem PU-Klebstoff offenbarten Ausführungsformen sind natürlich auch auf die beschriebenen Verwendungen und Verfahren anwendbar und umgekehrt. Nachfolgend soll die Erfindung an einigen exemplarischen Beispielen näher erläutert werden. Dabei sind die angegeben Mengen Gewichtsprozent, falls nicht anders angegeben.

### Beispiele

### Beispiel 1 (erfindunqsqemäß)

In einem heizbaren Rührkessel wurde aus den folgenden Bestandteilen eine reaktive Schmelzklebstoff-Zusammensetzung mit freien Isocyanatgruppen hergestellt:

| | |
|---|---|
| Polyester 1 (aus Adipinsäure und Hexandiol-1,6, OHZ 30) | 10 Gew.-% |
| Polyester 2 (aus Dodecandisäure und Hexandiol-1,6, OHZ 30) | 30 Gew.-% |
| Polyester 3 (aus Phthalsäure, Isophthalsäure und Neopentylglykol, OHZ 30) | 38 Gew.-% |
| Thermoplastisches Polyurethan (TPU, Pearlbond® 501, Lubrizol) | 5 Gew.-% |
| Glashohlkugeln (neutralisiert, 3M Glass Bubbles iM30K-N) | 5 Gew.-% |
| 4,4'-MDI (Diphenylmethandiisocyanat) | 12 Gew.-% |

Dazu wurden die Polyester 1-3 bei 130°C aufgeschmolzen und dann zusammen mit dem TPU und den Glashohlkugeln in den heizbaren Rührkessel eingefüllt und bei 130°C unter Vakuum auf einen Feuchtigkeitsgehalt von <200 ppm entwässert, wobei die Schmelze visuell auf Homogenität geprüft wird. Der Reaktionskessel wurde dann mit Stickstoff belüftet und die berechnete Menge 4,4'-MDI bei stehendem Rührer und 120-130°C zugegeben. Danach wird mit 100 U/min gerührt, Vakuum angelegt und die Temperatur bei 120-130°C gehalten. Die Reaktionszeit betrug 30 Minuten. Danach wurde die Reaktion beendet, das entgaste Produkt sofort in feuchtigkeitsdicht schließende Behälter abgefüllt und NCO-Gehalt (NCO-Gehalt gemäß EN ISO 11909:2007-05), Dichte und Viskosität (nach DIN EN ISO 2555:2000-01 mit einem Brookfield-Viskosimeter RV DV-II, Spindel Nr. 27, 130°C; 5 U/min) bestimmt. Die Dichte betrug 1,05 g/cm³. Die Viskosität stieg über 16h bei 130°C um 200 % an.

Der pH-Wert der Glashohlkugeln (5 Gew.-% in entmineralisiertem Wasser) bei 20°C betrug 7,0 (bestimmt gemäß EN ISO 10523:2012-04).

### Beispiel 2 (Vergleichsbeispiel)

In einem heizbaren Rührkessel wurde aus den folgenden Bestandteilen eine reaktive Schmelzklebstoff-Zusammensetzung mit freien Isocyanatgruppen hergestellt:

| | |
|---|---|
| Polyester 1 (Adipinsäure und Hexandiol-1,6, OHZ 30) | 10 Gew.-% |
| Polyester 2 (Dodecandisäure und Hexandiol-1,6, OHZ 30) | 30 Gew.-% |
| Polyester 3 (Phthalsäure, Isophthalsäure und Neopentylglykol, OHZ 30) | 38 Gew.-% |
| Thermoplastisches Polyurethan (TPU, Pearlbond® 501, Lubrizol) | 5 Gew.-% |
| Glashohlkugeln (nicht neutralisiert, 3M Glass Bubbles VS 5500) | 5 Gew.-% |
| 4,4'-MDI (Diphenylmethandiisocyanat) | 12 Gew.-% |

Die Herstellung erfolgt wie in Beispiel 1 beschrieben. Die Dichte des Produkts betrug 1,07 g/cm³. Die Viskosität stieg bei 130°C stark an und nach 1,5 h war das Produkt bereits vergelt (Anstieg >500 %).

Der pH-Wert der Glashohlkugeln (5 Gew.-% in entmineralisiertem Wasser) bei 20°C betrug 9,5 (bestimmt gemäß EN ISO 10523:2012-04).

### Beispiel 3 (Vergleichsbeispiel)

In einem heizbaren Rührkessel wurde aus den folgenden Bestandteilen eine reaktive Schmelzklebstoff-Zusammensetzung mit freien Isocyanatgruppen hergestellt:

| | |
|---|---|
| Polyester 1 (Adipinsäure und Hexandiol-1,6, OHZ 30) | 11 Gew.-% |
| Polyester 2 (Dodecandisäure und Hexandiol-1,6, OHZ 30) | 32 Gew.-% |
| Polyester 3 (Phthalsäure, Isophthalsäure und Neopentylglykol, OHZ 30) | 40 Gew.-% |
| Thermoplastisches Polyurethan (TPU, Pearlbond® 501, Lubrizol) | 5 Gew.-% |
| 4,4'-MDI (Diphenylmethandiisocyanat) | 12 Gew.-% |

Die Herstellung erfolgt wie in Beispiel 1 beschrieben. Die Dichte des Produkts betrug 1,20 g/cm³. Die Viskosität stieg über 16h bei 130°C um 210 % an.

### Beispiel 4 (Vergleichsbeispiel)

In einem heizbaren Rührkessel wurde aus den folgenden Bestandteilen eine reaktive Schmelzklebstoff-Zusammensetzung mit freien Isocyanatgruppen hergestellt:

| | |
|---|---|
| Polyester 1 (Adipinsäure und Hexandiol-1,6, OHZ 30) | 10 Gew.-% |
| Polyester 2 (Dodecandisäure und Hexandiol-1,6, OHZ 30) | 32 Gew.-% |
| Polyester 3 (Phthalsäure, Isophthalsäure und Neopentylglykol, OHZ 30) | 40 Gew.-% |
| Thermoplastisches Polyurethan (TPU, Pearlbond® 501, Lubrizol) | 5 Gew.-% |
| Polymermikrokapseln (Expancell DU80, Akzo Nobel) | 1 Gew.-% |
| 4,4'-MDI (Diphenylmethandiisocyanat) | 12 Gew.-% |

Die Herstellung erfolgt wie in Beispiel 1 beschrieben. Die Dichte des Produkts betrug 1,08 g/cm³. Die Viskosität stieg bei 130°C stark an und nach 1,5 h war das Produkt bereits vergelt (Viskosität nicht mehr messbar).

### Beispiel 5 (Verqleichsbeispiel):

In einem heizbaren Rührkessel wurde aus den folgenden Bestandteilen eine reaktive Schmelzklebstoff-Zusammensetzung mit freien Isocyanatgruppen hergestellt:

| | |
|---|---|
| Polyester 1 (Adipinsäure und Hexandiol-1,6, OHZ 30) | 10 Gew.-% |
| Polyester 2 (Dodecandisäure und Hexandiol-1,6, OHZ 30) | 30 Gew.-% |
| Polyester 3 (Phthalsäure, Isophthalsäure und Neopentylglykol, OHZ 30) | 37,95 Gew.-% |
| Thermoplastisches Polyurethan (TPU, Pearlbond® 501, Lubrizol) | 5 Gew.-% |
| Glashohlkugeln (nicht neutralisiert, 3M Glass Bubbles K20) | 5 Gew.-% |
| Phosphorige Säure (H₃PO₃) | 0,05 Gew.-% |
| 4,4'-MDI (Diphenylmethandiisocyanat) | 12 Gew.-% |

Die Herstellung erfolgt wie in Beispiel 1 beschrieben. Die Dichte des Produkts betrug 1,07 g/cm³. Die Viskosität stieg bei 130°C stark an und nach 2 h war das Produkt bereits vergelt (Anstieg >500 %). Der Zusatz von Säure führt also zu keiner ausreichenden Stabilisierung.

## Patentansprüche

1. Reaktive Schmelzklebstoff-Zusammensetzung auf Polyurethanbasis enthaltend bezogen auf das Gesamtgewicht der Klebstoff-Zusammensetzung 1 bis <30 Gew.-%, vorzugsweise 1 bis <10 Gew.-%, insbesondere bevorzugt 2 bis 6 Gew.-% mindestens eines festen, partikulären Füllstoffs, **dadurch gekennzeichnet, dass** der mindestens eine Füllstoff neutralisierte Glashohlkugeln sind, wobei die Glashohlkugeln als 5 Gew.-%ige Dispersion in Wasser bei 20°C einen pH-Wert von 6 bis 8, vorzugsweise von 6,5 bis 7,5 aufweisen.

2. Schmelzklebstoff-Zusammensetzung nach Anspruch 1 **dadurch gekennzeichnet, dass** der mindestens einen Füllstoff eine mittlere Partikelgröße d₅₀ von 5 bis 50 |jm aufweist.

3. Schmelzklebstoff-Zusammensetzung nach Anspruch 1 oder 2, **dadurch gekennzeichnet, dass** die Schmelzklebstoff-Zusammensetzung mindestens ein NCO-terminiertes Polyurethanpräpolymer enthält, vorzugsweise in einer Menge von 20 bis 95 Gew.-% bezogen auf das Gesamtgewicht der Schmelzklebstoff-Zusammensetzung.

4. Schmelzklebstoff-Zusammensetzung nach mindestens einem der Ansprüche 1 bis 3, **dadurch gekennzeichnet, dass** das NCO-terminierte Polyurethanpräpolymer ein aromatisches Isocyanat-terminiertes, noch bevorzugter MDI-terminiertes Polyurethan-Präpolymer aus einer Polyesterpolyolmischung und einem aromatischen Diisocyanat, insbesondere MDI, ist.

5. Schmelzklebstoff-Zusammensetzung nach mindestens einem der Ansprüche 1 bis 4, **dadurch gekennzeichnet, dass** der Schmelzklebstoff ein feuchtigkeitshärtender 1K-Polyurethan-Schmelzklebstoff ist.

6. Schmelzklebstoff-Zusammensetzung nach mindestens einem der Ansprüche 1 bis 5, **dadurch gekennzeichnet, dass** die Zusammensetzung ferner mindestens einen thermoplastischen Polyester enthält, vorzugsweise in einer Menge von 3 bis 35 Gew-%, insbesondere von 5 bis 25 Gew.-% bezogen auf das Gesamtgewicht der Schmelzklebstoff-Zusammensetzung.

7. Schmelzklebstoff-Zusammensetzung nach mindestens einem der Ansprüche 1 bis 6, **dadurch gekennzeichnet, dass** die Schmelzklebstoff-Zusammensetzung
(a) bei einer Temperatur von 130°C eine Viskosität von 2000 bis 60.000, insbesondere 40.000 mPas bestimmt nach DIN EN ISO 2555:2000-01 (Brookfield-Viskosimeter RV DV-II, Spindel Nr. 27, 130°C; 5 U/min) aufweist; und/oder
(b) einem NCO-Gehalt von 0,25 bis 4 Gew.-% aufweist; und/oder
(c) eine Dichte von ≤1,5 g/cm³, vorzugsweise 0,8 bis 1,5 g/cm³, noch bevorzugter 0,9 bis 1,2 g/cm³, am bevorzugtesten von 0,9 bis 1,1 g/cm³ aufweist.

8. Schmelzklebstoff-Zusammensetzung nach mindestens einem der Ansprüche 1 bis 7, **dadurch gekennzeichnet, dass** die Schmelzklebstoff-Zusammensetzung nach 16h bei 130°C einen Viskositätsanstieg von nicht mehr als 400% aufweist, vorzugsweise nicht mehr als 250%.

9. Schmelzklebstoff-Zusammensetzung nach mindestens einem der Ansprüche 1 bis 8, **dadurch gekennzeichnet, dass**
(a) die Zusammensetzung ferner ein oder mehre Additive ausgewählt aus klebrig machenden Harzen (Tackifier), Haftvermittlern, Vernetzungsmitteln oder Viskositätsreglern, Pigmenten, Weichmachern, Stabilisatoren und/oder Katalysatoren, Wachsen oder Antioxidantien enthält; und/oder
(b) die Zusammensetzung weniger als 1 Gew.-% organische Lösungsmittel enthält.

10. Verwendung der Schmelzklebstoff-Zusammensetzung nach mindestens einem der Ansprüche 1 bis 9 zum Verkleben von zwei oder mehr Substraten.

## Claims

1. A reactive polyurethane-based hot-melt adhesive composition containing, based on the total weight of the adhesive composition, from 1 to < 30 wt.%, preferably 1 to < 10 wt.%, particularly preferably 2 to 6 wt.% of at least one solid particulate filler, **characterized in that** the at least one filler is neutralized hollow glass spheres, the hollow glass spheres, as a 5 wt.% dispersion in water at 20 °C, having a pH of from 6 to 8, preferably from 6.5 to 7.5.

2. The hot-melt adhesive composition according to claim 1, **characterized in that** the at least one filler has an average particle size d₅₀ of from 5 to 50 µm.

3. The hot-melt adhesive composition according to claim 1 or 2, **characterized in that** the hot-melt adhesive composition contains at least one NCO-terminated polyurethane prepolymer, preferably in an amount of from 20 to 95 wt.% based on the total weight of the hot-melt adhesive composition.

4. The hot-melt adhesive composition according to at least one of claims 1 to 3, **characterized in that** the NCO-terminated polyurethane prepolymer is an aromatic isocyanate-terminated, more preferably MDI-terminated polyurethane prepolymer of a polyester polyol mixture and an aromatic diisocyanate, in particular MDI.

5. The hot-melt adhesive composition according to at least one of claims 1 to 4, **characterized in that** the hot-melt adhesive is a moisture-curing 1K polyurethane hot-melt adhesive.

6. The hot-melt adhesive composition according to at least one of claims 1 to 5, **characterized in that** the composition further contains at least one thermoplastic polyester, preferably in an amount of from 3 to 35 wt.%, in particular 5 to 25 wt.%, based on the total weight of the hot-melt adhesive composition.

7. The hot-melt adhesive composition according to at least one of claims 1 to 6, **characterized in that** the hot-melt adhesive composition
(a) at a temperature of 130 °C has a viscosity of from 2,000 to 60,000, in particular 40,000 mPas determined according to DIN EN ISO 2555:2000-01 (Brookfield viscometer RV DV-II, spindle no. 27, 130 °C; 5 rpm); and/or
(b) an NCO-content of from 0.25 to 4 wt.%; and/or
(c) a density of ≤ 1.5 g/cm³, preferably 0.8 to 1.5 g/cm³, more preferably 0.9 to 1.2 g/cm³, most preferably 0.9 to 1.1 g/cm³.

8. The hot-melt adhesive composition according to at least one of claims 1 to 7, **characterized in that** the hot-melt adhesive composition has an increase in viscosity after 16 h at 130 °C of no more than 400%, preferably no more than 250%.

9. The hot-melt adhesive composition according to at least one of claims 1 to 8, **characterized in that**
(a) the composition further contains one or more additives selected from tackifying resins (tackifiers), adhesion promoters, crosslinking agents or viscosity regulators, pigments, plasticizers, stabilizers and/or catalysts, waxes or antioxidants; and/or
(b) the composition contains less than 1 wt.% of organic solvents.

10. The use of the hot-melt adhesive composition according to at least one of claims 1 to 9 for adhesively bonding two or more substrates.

## Revendications

1. Composition adhésive thermofusible réactive à base de polyuréthane contenant, par rapport au poids total de la composition adhésive, 1 à < 30 % en poids, de préférence 1 à < 10 % en poids, de manière particulièrement préférée 2 à 6 % en poids d'au moins une charge particulaire solide, **caractérisée en ce que** l'au moins une charge est constituée de billes de verre creuses neutralisées, les billes de verre creuses présentant un pH de 6 à 8, de préférence de 6,5 à 7,5 en dispersion à 5 % en poids dans de l'eau à 20 °C.

2. Composition adhésive thermofusible selon la revendication 1, **caractérisée en ce que** l'au moins une charge présente une granulométrie moyenne d₅₀ de 5 à 50 µm.

3. Composition adhésive thermofusible selon la revendication 1 ou 2, **caractérisée en ce que** la composition adhésive thermofusible contient au moins un prépolymère de polyuréthane à terminaison NCO, de préférence en une quantité de 20 à 95 % en poids par rapport au poids total de la composition adhésive thermofusible.

4. Composition adhésive thermofusible selon au moins l'une des revendications 1 à 3, **caractérisée en ce que** le prépolymère de polyuréthane à terminaison NCO est un prépolymère de polyuréthane à terminaison isocyanate aromatique, de manière davantage préférée à terminaison MDI constitué d'un mélange de polyester polyol et d'un diisocyanate aromatique, en particulier le MDI.

5. Composition adhésive thermofusible selon au moins l'une des revendications 1 à 4, **caractérisée en ce que** l'adhésif thermofusible est un adhésif thermofusible polyuréthane 1K durcissable à l'humidité.

6. Composition adhésive thermofusible selon au moins l'une des revendications 1 à 5, **caractérisée en ce que** la composition contient en outre au moins un polyester thermoplastique, de préférence en une quantité de 3 à 35 % en poids, en particulier de 5 à 25 % en poids, par rapport au poids total de la composition adhésive thermofusible.

7. Composition adhésive thermofusible selon au moins l'une des revendications 1 à 6, **caractérisée en ce que** la composition adhésive thermofusible
(a) présente une viscosité de 2 000 à 60 000, en particulier de 40 000 mPa.s, déterminée selon la norme DIN EN ISO 2555:2000-01 (viscosimètre Brookfield RV DV-II, broche n°27, 130 °C ; 5 tr/min), à une température de 130 °C ; et/ou
(b) présente une teneur en NCO de 0,25 à 4 % en poids ; et/ou
(c) présente une densité ≤ 1,5 g/cm³, de préférence de 0,8 à 1,5 g/cm³, de manière davantage préférée de 0,9 à 1,2 g/cm³, de manière tout particulièrement préférée de 0,9 à 1,1 g/cm³.

8. Composition adhésive thermofusible selon au moins l'une des revendications 1 à 7, **caractérisée en ce que** la composition adhésive thermofusible présente une augmentation de viscosité d'au plus 400 %, de préférence d'au plus 250 %, après 16 heures à 130 °C.

9. Composition adhésive thermofusible selon au moins l'une des revendications 1 à 8, **caractérisée en ce que**
(a) la composition contient en outre un ou plusieurs additifs choisis parmi les résines tackifiantes (agents poisseux), les promoteurs d'adhérence, les agents réticulants ou les régulateurs de la viscosité, les pigments, les plastifiants, les stabilisants et/ou les catalyseurs, les cires ou les antioxydants ; et/ou
(b) la composition contient moins de 1 % en poids de solvants organiques.

10. Utilisation de la composition adhésive thermofusible selon au moins l'une des revendications 1 à 9 pour coller deux substrats ou plus.
